Europäisches Patentamt

European Patent Office

Office européen des brevets

(19)

(11) Veröffentlichungsnummer: **0 161 209**

**A2**

(12) # EUROPÄISCHE PATENTANMELDUNG

(21) Anmeldenummer: **85810101.7**

(22) Anmeldetag: **08.03.85**

(51) Int. Cl.⁴: **G 01 C 9/12**
**G 01 D 13/00**

(30) Priorität: **15.03.84 CH 4875/83**

(43) Veröffentlichungstag der Anmeldung:
**13.11.85 Patentblatt 85/46**

(84) Benannte Vertragsstaaten:
**AT BE CH DE FR GB IT LI LU NL SE**

(71) Anmelder: **Willa, Siegfried**
**Bahnhofstrasse 4+6**
**CH-3900 Brig(Kanton Wallis)(CH)**

(72) Erfinder: **Willa, Siegfried**
**Bahnhofstrasse 4+6**
**CH-3900 Brig(Kanton Wallis)(CH)**

(74) Vertreter: **Tschudi, Lorenz et al,**
**Bovard AG Patentanwälte VSP Optingenstrasse 16**
**CH-3000 Bern 25(CH)**

(54) **Messgerät zur Messung des Neigungswinkels sowie Skalenscheibe zur Verwendung mit dem Messgerät.**

(57) Das Messgerät (55) weist in einem Gehäuse eine Skalenscheibe (62) mit einem ersten Bereich auf, der die Neigung in Prozent angibt, einen zweiten Bereich, der die Neigung in neuen Grad und einen dritten Bereich, der die Neigung in alten Grad angibt. Drei optische Elemente (63, 64, 65) sind zur Vergrösserung der Skalenwerte bei der Ablesung ausgebildet. Dadurch kann die Skalenscheibe (62) relativ klein bemessen werden, was eine handliche Gestaltung des Messgerätes ermöglicht.

FIG. 6

EP 0 161 209 A2

Croydon Printing Company Ltd.

Messgerät zur Messung des Neigungswinkels sowie
Skalenscheibe zur Verwendung mit dem Messgerät

---

Die vorliegende Erfindung bezieht sich auf ein Messgerät zur Messung des Neigungswinkels mit einem Gehäuse und
mindestens einem darin angeordneten Anzeigeorgan sowie auf
eine Skalenscheibe zur Verwendung mit dem Messgerät.

Bekannte Messgeräte zur Messung des Neigungswinkels
weisen nach Nachteil auf, dass auf grössere Distanz eine
Ablesung des angezeigten Skalenwertes nicht mehr möglich
ist, oder aber dass die Messgeräte sehr gross ausgeführt
werden müssen.

Es ist deshalb eine Aufgabe der vorliegenden Erfindung, ein Messgerät zur Messung des Neigungswinkels zu
schaffen, mit welchem eine genaue Ablesung auch bei kleiner
Ausführung des Anzeigeorganes ermöglicht wird.

Dies wird erfindungsgemäss dadurch erzielt, dass das
Anzeigeorgan als eine drehbare Skalenscheibe ausgebildet
ist, und über der Skalenscheibe mindestens ein optisches
Element zur Vergrösserung der auf der Scheibe angebrachten
Skalenwerte vorgesehen ist.

Bevorzugte Ausführungsformen der Erfindung ergeben
sich aus den abhängigen Ansprüchen.

Im folgenden werden anhand der beiliegenden Zeichnung
Ausführungsbeispiele der Erfindung sowie deren Verwendung
näher beschrieben. Es zeigen:

Fig. 1  ein erstes Ausführungsbeispiel eines Gerätes
zur Messung des Neigungswinkels,

Fig. 2  einen Schnitt gemäss der Linie II-II der Fig.
1,

Fig. 3 einen Schnitt durch ein optisches Element gemäss der Linie III-III der Fig. 1,

Fig. 4 einen Schnitt gemäss Linie IV-IV der Fig. 1 mit angesetztem Zusatzprofil,

Fig. 5 eine Verwendung des Messgerätes,

Fig. 6 ein weiteres Ausführungsbeispiel,

Fig. 7 einen Schnitt gemäss der Linie VII-VII der Fig. 6,

Fig. 8 eine Skalenscheibe mit drei Teilbereichen.

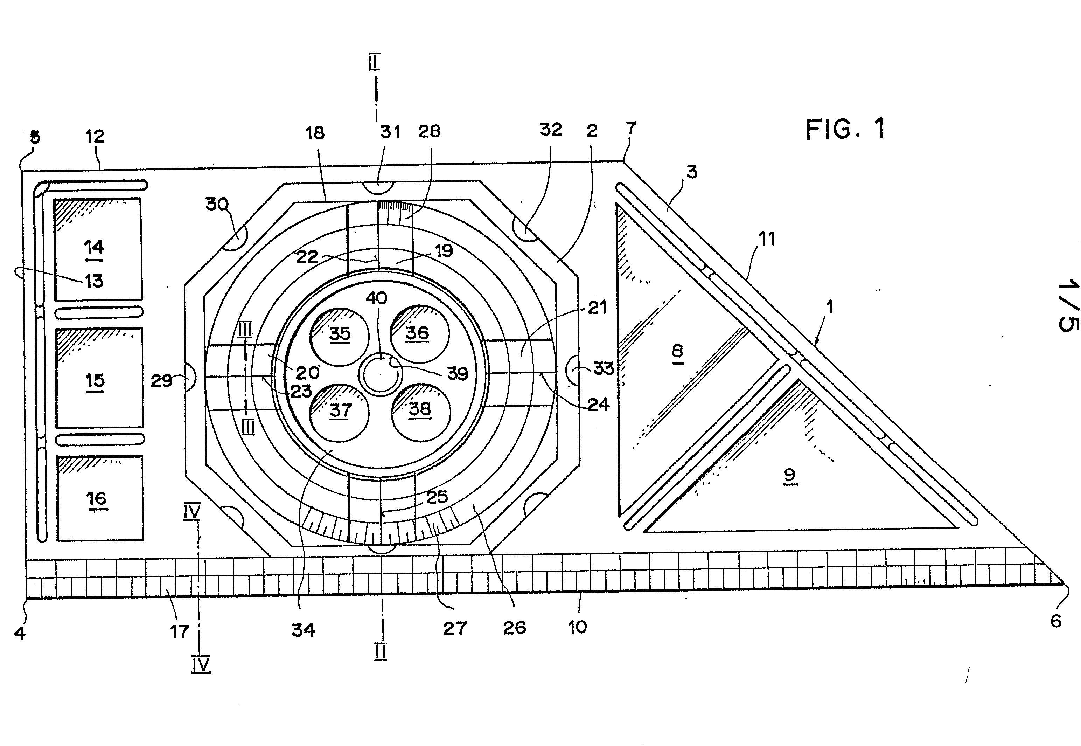

In Fig. 1 ist in Ansicht ein erstes Ausführungsbeispiels eines Gerätes 1 zur Messung des Neigungswinkels dargestellt. Eine Messeinheit 2 ist in einem Rahmenprofil 3 des Gerätes 1 eingebaut. Das Rahmenprofil 3 weist zwei Anschlagwinkel 4 und 5 von 90°, einen Anschlagwinkel 6 von 45° und einen Anschlagwinkel 7 von 135° auf. Es sind innerhalb des Rahmenprofiles 3 zwei als gleichschenklige Dreiecke ausgebildete Oeffnungen 8 und 9 vorgesehen. Die Oeffnungen 8, 9 weisen zwei Winkel von 45° und einen Winkel von 90° auf. Im weiteren sind drei quadratische Ausnehmungen 14, 15, 16 vorgesehen. Zur Messung des Neigungswinkels von Kanten und Flächen, z.B. bei Bauten, wird eine der Aussenflächen 10,11, 12 oder 13 des Gerätes zur Messung des Neigungswinkels an das zu messende Element angelegt. Zur Messung der Neigung kleinerer Strukturen können die Oeffnungen 8, 9 oder 14-16 verwendet werden. Am Rahmenprofil 3 ist eine äussere Skala 17 vorgesehen. Auf den Rahmen ist ein im Querschnitt kreisrunder oder z.B. achteckiger transparenter Kunststoffkörper 18 aufgesetzt. Im Kunststoffkörper 18 sind drei im Querschnitt halbzylinderförmige Linsen 19, 20 und 21 ausgebildet. In der Mitte der Linsenkörper 19, 20 und 21 ist je eine Strichmarke 22, 23 und 24 vorgesehen. Zwischen den Linsenkörpern 20 und 21, d.h. um 180° gegenüber dem Linsenkörper 19 versetzt, ist ebenfalls eine Strichmarke 25 vorgesehen. Zwischen dem Rahmen 3 und dem Kunststoffkörper 18 ist eine drehbare Skalenscheibe 26 vorgesehen. Auf dieser Skalenscheibe sind verschiedene Strichmarkierungen 27 und 28 vorgesehen. Mit den Lupen 19, 20 und 21 und den an diesen vorgesehenen Strichmarken 22, 23 und 24 können die Skalenwerte vergrössert abgelesen werden. Für Brillenträger ist die Strichmarke 25 ohne Lupe vorgesehen, da sich gegebenenfalls, je nach optischer Konfiguration der Brille und der Lupe die Vergrösserungswirkung aufheben könnte. Am äusseren Umfang des Kunststoffkörpers 18 sind noch fünf Libellen 29, 30, 31, 32 und 33 zur groben Ablesung der Waagrechten, der Senkrechten und eines 45°-Winkels vorgesehen. Konzentrisch zur drehbaren Skalenscheibe 26 resp, zum Kunststoffkörper 18 ist ein Blockierelement 34 mit vier Ausnehmungen 35-38 zum Verschrauben desselben vorgesehen. In der Mitte des Blockierelementes 34 ist eine mit einem Gewinde 39 versehene Bohrung 40 vorgesehen.

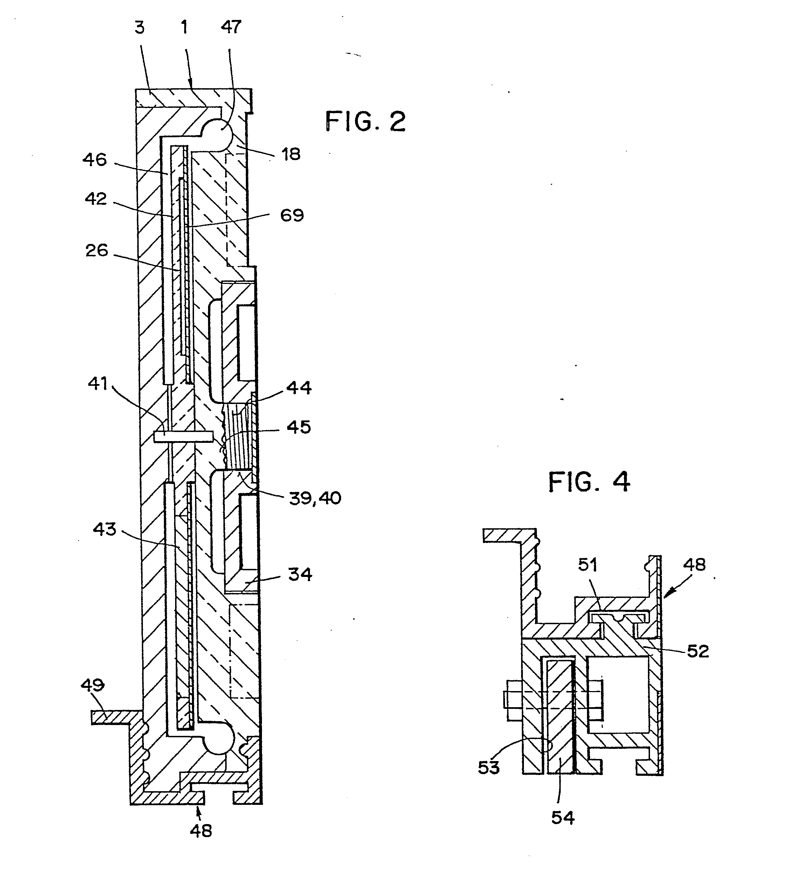

In Fig. 2 ist ein Schnitt entsprechend der Linie II-II der Fig. 1 dargestellt. Wie aus dieser Figur ersichtlich ist, ist die drehbare Skalenscheibe 26 auf einer Achse 41 gelagert. In einem gemäss Fig. 2 oberen Bereich 42 ist die Skalenscheibe leicht konisch ausgebildet. In einem unteren Bereich ist eine Bleieinlage 43 vorgesehen, damit die Schwerkraft auf die Skalenscheibe 26 wirken kann. Der Kunststoffkörper 18, der vorzugsweise transparent und aus einem Polycarbonat hergestellt ist, weist in seinem mittleren Teil einen mit einem Gewinde 44 versehenen Bolzen 45 auf. Wenn das Blockierelement 34 nach rechts gedreht, also in Richtung der Skalenscheibe 26 verschoben wird, so wird der mit dem Bolzen 45 verbundene Kunststoffkörper etwas von der Skalenscheibe 26 abgehoben, wobei dieselbe dann frei drehbar ist. Im Bereich zwischen dem Rahmen 3 und dem Kunststoffkörper 18 ist eine Flüssigkeit 46, z.B. Oel oder Alkohol, vorgesehen, welche die Schwingungen der drehbaren Skalenscheibe 26 dämpft.

Ein zwischen dem Rahmen 3 und dem Kunststoffkörper 18 vorgesehener Kanal 47 ist ebenfalls mit der Flüssigkeit 46 gefüllt und kommuniziert mit den Zwischenräumen zwischen Skalenscheibe 26 und dem Rahmen 3 sowie dem Kunststoffkörper 18. Die Flüssigkeit hat über diesen Kanal 47 Zutritt zu den Libellen 29, 30, 31, 32 und 33.

Eine gemäss Fig. 2 unten am Rahmen 3 und Kunststoffkörper 18 befestigte Metallschiene 48 dient zum Aufsetzen des Winkelmessgerätes 1 auf ein Zusatzprofil.

Wie aus Fig. 2 ersichtlich ist, ist eine Anschlagleiste 49 vorgesehen, welche z.B. bei der Vermessung von Täfelung in die Fugen zwischen den einzelnen Täfeln eingeführt werden kann. Mit 50 ist die Aluminiumschicht mit den eingravierten Skalenteilen der Skalenscheibe 26 bezeichnet.

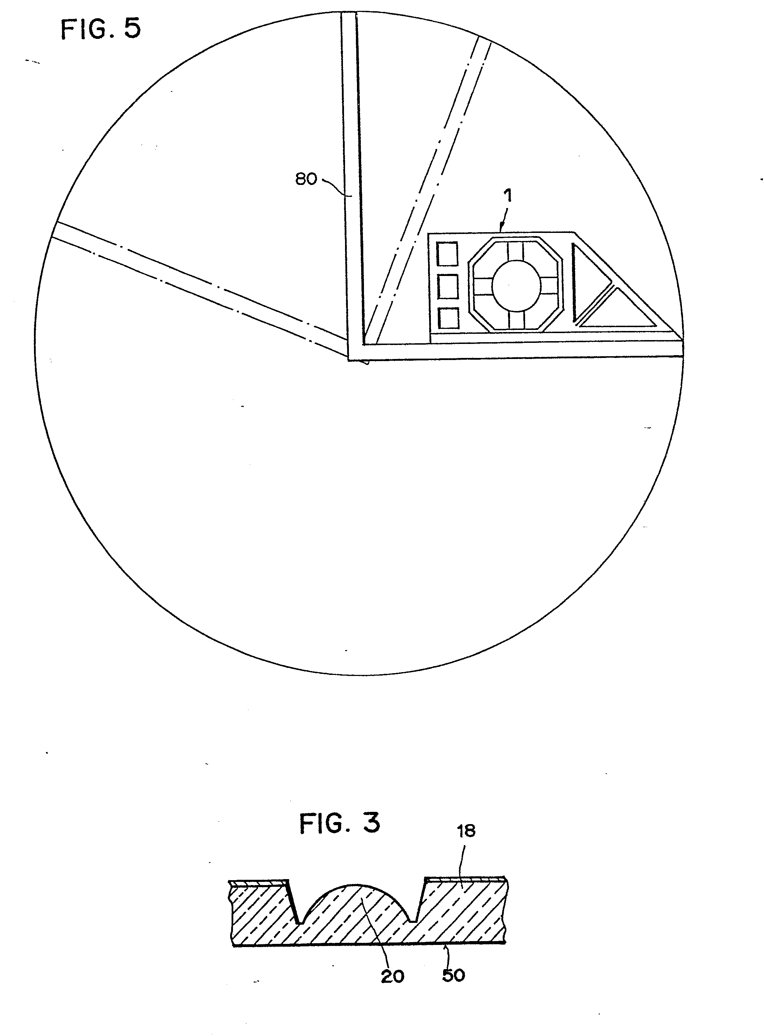

In Fig. 3 ist ein Schnitt gemäss der Linie III-III der Fig. 1 dargestellt. Daraus ist die Formgebung des Kunststoffkörpers im Bereich der halbzylinderförmigen Lupe 20 ersichtlich. Die Lupen 19, 20, und 21 weisen vorzugsweise dieselbe Form auf. Die Skalenscheibe 26 ist vorzugsweise ebenfalls aus Kunststoff, z.B. aus einem Polycarbonat wie der Kunststoffkörper 18, gefertigt.

In Fig. 4 ist noch die Metallschiene 48 des Winkelmessgerätes 1 in vergrösserter Form dargestellt. Mit der darin vorgesehenen Nut 51 eignet sich das Profil zum Aufsetzen auf ein Zusatzprofil 52. Diese weist eine gemäss Fig. 4 vertikale Nut 53 auf, in welche eine Schiene 54 eingeführt werden kann. Beispielsweise kann bei einer im ganzen Winkelbereich um 360° verstellbaren, drehbaren Schiene 54 so mit dem Winkelmessgerät 1 jeder Winkel abgelesen werden.

In Fig. 5 ist eine Verwendung des Messgerätes bei einer drehbaren Messschiene 80 dargestellt.

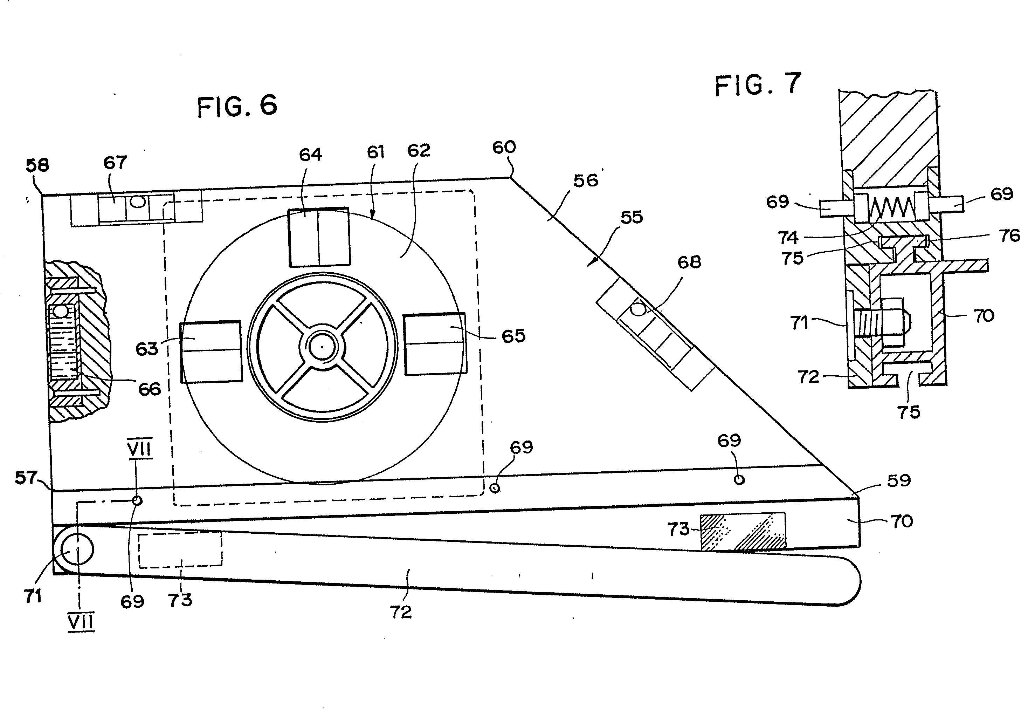

In Fig. 6 ist ein weiteres Ausführungsbeispiel eines Messgerätes 55 zur Messung des Neigungswinkels dargestellt. Das Messgerät umfasst ebenfalls einen Rahmen 56, der zwei Anschlagwinkel 57 und 58 von 90°, einen Anschlagwinkel 59 von 45° und einen Anschlagwinkel 60 von 135° aufweist. Im Innern des Gehäuses oder Rahmens 56 ist die Messeinheit 61 mit der drehbaren Skalenscheibe 62 vorgesehen. Ueberhalb der

0161209

Skalenscheibe sind drei Lupen 63, 64 und 65 vorgesehen, die in einem Winkel von je 90° zueinander angeordnet sind. Diese Lupen dienen wie beim Ausführungsbeispiel gemäss den Fig. 1-4 zum Ablesen der auf der Skalenscheibe 62 vorgesehenen Skalenwerte. Aussen am Rahmen 56 sind noch drei Libellen 66, 67 und 68 eingebaut, die ein grobes Ablesen der Senkrechten, Waagrechten oder eines 45°-Winkels ermöglichen. Unten gemäss Fig. 6 sind am Rahmenprofil 56 auf beiden Seiten desselben hineindrückbare Bolzen 69 vorgesehen. Im weiteren ist unten am Messgerät noch ein Zusatzprofil 70 vorgesehen. Ueber dem Rahmenprofil 70 ist auf der linken Seite des Messgerätes eine um eine Achse 71 drehbare Winkelleiste 72 vorgesehen. Im Zusatzprofil 70 sind Magnete 73 eingebaut, welche bei Messen des Neigungswinkels von z.B. Stahlträgern ein besseres Ansetzen des Winkelmessgerätes ermöglichen.

In Fig. 7 ist ein Schnitt gemäss Linie VII-VII der Fig. 6 dargestellt. Die Bolzen 69 sind gegen den Druck einer Feder 74 hineindrückbar angeordnet, so dass das Winkelmessgerät auch bei Auflage auf eine plane Unterlage zur Einzeichnung oder Messung von Winkeln verwendet werden kann. Wird auf die Bolzen 69 kein Druck ausgeübt, so dienen die auf einer Geraden angeordneten Bolzen 69 als Anschlagleiste. Am untern Ende des Winkelmessgerätes 55 ist ein T-förmiges Hohlprofil 75 vorgesehen, in welches das Zusatzprofil 70 mit dem Ansatz 76 eingeschoben werden kann.

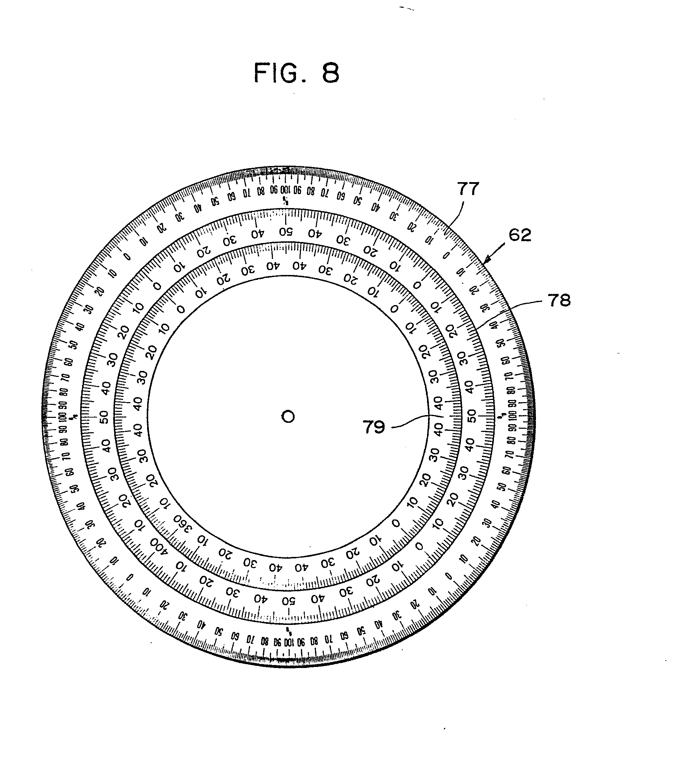

In Fig. 8 ist eine Draufsicht auf die Skalenscheibe 26 resp. 62 dargestellt. Die Skalenscheibe 26, 62 weist einen ersten Bereich 77 auf, der in Prozent eingeteilt ist, einen zweiten Bereich 78, der in neue Grad und einen dritten Bereich 79, der in alte Grad eingeteilt ist.

**0161209**

<u>Patentansprüche:</u>

1. Messgerät zur Messung des Neigungswinkels mit einem Gehäuse und mindestens einem darin angeordneten Anzeigeorgan, dadurch gekennzeichnet, dass das Anzeigeorgan als eine drehbare Skalenscheibe ausgebildet ist, und über der Skalenscheibe mindestens ein optisches Element zur Vergrösserung der auf der Scheibe angebrachten Skalenwerte vorgesehen ist.

2. Messgerät nach Patentanspruch 1, dadurch gekennzeichnet, dass drei optische Elemente vorgesehen sind.

3. Messgerät nach Patentanspruch 2, dadurch gekennzeichnet, dass die optischen Elemente auf durch den Mittelpunkt der Skalenscheibe laufenden Achsen angeordnet sind, wobei diese Achsen je einen Winkel von 90° miteinander einschliessen.

4. Messgerät nach einem der vorangehenden Patentansprüche, dadurch gekennzeichnet, dass ein Blockierelement zur Arretierung der Skalenscheibe vorgesehen ist.

5. Messgerät nach einem der vorangehenden Patentansprüche, dadurch gekennzeichnet, dass die Skalenscheibe mindestens teilweise von einer die Drehbewegungen der Skala dämpfenden Flüssigkeit umgeben ist.

6. Messgerät nach einem der vorangehenden Patentansprüche, dadurch gekennzeichnet, dass die Skalenscheibe mehrere Bereiche aufweist, wobei ein erster Bereich in Prozent, ein zweiter Bereich in neue Grad und ein dritter Bereich in alte Grad aufgeteilt ist.

**0161209**

7. Messgerät nach einem der vorangehenden Patentansprüche, dadurch gekennzeichnet, dass der Längsschnitt durch das Gehäuse ein Vieleck mit verschiedenen definierten Winkeln bildet.

8. Messgerät nach einem der vorangehenden Patentansprüche, dadurch gekennzeichnet, dass mindestens auf einer Seite des Gehäuses auf einer Linie mindestens zwei in das Gehäuse hineindrückbare Bolzen vorgesehen sind.

9. Messgerät nach einem der vorangehenden Patentansprüche, gekennzeichnet durch eine drehbar mit dem Gehäuse verbundene Winkelleiste.

10. Messgerät nach einem der vorangehenden Patentansprüche, gekennzeichnet durch im Gehäuse vorgesehene Magnetelemente.

11. Messgerät nach einem der vorangehenden Patentansprüche, dadurch gekennzeichnet, dass im oder am Gehäuse ein zusätzliches Messorgan zur Messung des Neigungswinkels der Skalenscheibe vorgesehen ist.

12. Messgerät nach einem der vorangehenden Patentansprüche, gekennzeichnet durch mindestens eine im Gehäuse vorgesehene Libelle zur Messung des Neigungswinkels.

13. Skalenscheibe zur Verwendung mit einem Messgerät nach einem der vorangehenden Patentansprüche, dadurch gekennzeichnet, dass die Skalenscheibe mehrere Bereiche aufweist, wobei ein erster Bereich in Prozent, ein zweiter Bereich in neue Grad und ein dritter Bereich in alte Grad aufgeteilt ist.

0161209

FIG. 1

2/5

0161209

FIG. 2

FIG. 4

FIG. 5

80

1

FIG. 3

18

20    50

FIG. 6

FIG. 7

4/5

01 61 209

0161209

FIG. 8